# EUROPEAN PATENT APPLICATION

(11) **EP 4 807 413 A1**
(43) Date of publication of application: **16.09.2026**
(21) Application number: 26164554.3
(22) Date of filing: 13.03.2026
(51) Int. Cl.: G02B 6/122

(54) **PASSIVE WAVEGUIDES FOR HIGH OPTICAL POWER**

(30) Priority: 14.03.2025 US 202563771850 P; 03.11.2025 US 202519377279
(71) Applicant: Nvidia Corporation, Santa Clara, CA 95051 (US)
(72) Inventor: DE KONINCK, Yannick Charles J., Santa Clara, 95051 (US); MA, Chaoxuan, Santa Clara, 95051 (US); HUANG, Mengyuan, Santa Clara, 95051 (US); OLUWOLE, Olakanmi, Santa Clara, 95051 (US)
(74) Representative: Mathys & Squire

(57) **Abstract**

A waveguide includes an inner rib comprising a core of the waveguide. The waveguide further includes first and second outer ribs having at least one structural feature different from the inner rib.

## Description

### CROSS REFERENCE TO RELATED APPLICATIONS

This application claims priority to U.S. Provisional Application 63/771,850, filed on March 14, 2025, the entire contents of which are incorporated by reference herein.

### BACKGROUND

Silicon photonics is a technology for leveraging silicon-based waveguides to carry optical signals, such as in data transfer applications.

### GENERAL DESCRIPTION

The invention is defined by the claims. In order to illustrate the invention, aspects and embodiments which may or may not fall within the scope of the claims are described herein.

At high optical powers, silicon waveguides may experience nonlinear losses caused by a combination of two-photon absorption (TPA) and free-carrier absorption (FCA) which, over time, may also cause waveguide damage leading to permanent losses. At least one embodiment is directed to a waveguide structure that reduces nonlinear losses and damage at high optical powers. The waveguide structure may include three silicon ribs (or ridges): an inner rib and two outer ribs spaced apart from the inner rib. The two outer ribs may have at least one structural feature different from the inner rib, such as an increased cross-sectional area compared to the inner rib and/or an undoped top silicide layer.

An illustrative embodiment of the present disclosure is directed to a waveguide comprising an inner rib comprising a core of the waveguide, and first and second outer ribs having at least one structural feature different from the inner rib.

Another illustrative embodiment of the present disclosure is directed to an optical device comprising a silicon waveguide comprising an inner section comprising a core of the silicon waveguide and an outer section spaced apart from the inner section. The optical device further comprises a silicide layer on the outer section.

Another illustrative embodiment of the present disclosure is directed to an optical system comprising one or more circuits to generate optical signals, and a waveguide to carry the optical signals. The waveguide includes an inner section comprising a core of the waveguide and an outer section spaced apart from the inner section. The optical system further comprises a silicide layer on the outer section.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

The present disclosure is described in conjunction with the appended figures, which are not necessarily drawn to scale. Like reference numbers and designations in the various drawings may indicate like elements.
Fig. 1 is a block diagram depicting an optical system and details of a waveguide in accordance with one or more embodiments of the present disclosure.
Figs. 2A-2C are diagrams depicting details of a waveguide in accordance with one or more embodiments of the present disclosure.
Fig. 3 is a graph showing performance of the waveguide(s) in Figs. 2A-2C in accordance with one or more embodiments of the present disclosure.
Fig. 4 is a block diagram illustrating a computing system that may be integrated with a transceiver in accordance with one or more embodiments of the present disclosure.
Fig. 5 is a flowchart illustrating an example method for providing optical communications via a silicon photonics device in accordance with one or more embodiments of the present disclosure.
Fig. 6 is a flowchart illustrating an example method for providing optical communications via a silicon photonics device in accordance with one or more embodiments of the present disclosure.
Fig. 7 is a block diagram that schematically illustrates a co-packaged networking device in accordance with one or more embodiments of the present disclosure.
Figs. 8A and 8B are a cross-sectional view and a top plan view, respectively, of an optoelectronic component in accordance with one or more embodiments of the present disclosure.
Fig. 9 illustrates another example optoelectronic component in accordance with one or more embodiments of the present disclosure.
Fig. 10 illustrates another example optoelectronic component in accordance with one or more embodiments of the present disclosure.
Fig. 11 illustrates an example of an optical interposer in accordance with one or more embodiments of the present disclosure.
Fig. 12 is a block diagram that schematically illustrates an example computing system or environment in accordance with one or more embodiments of the present disclosure.
Fig. 13 illustrates another example computing system or environment in accordance with one or more embodiments of the present disclosure.

### DETAILED DESCRIPTION

The ensuing description provides embodiments only, and is not intended to limit the scope, applicability, or configuration of the claims. Rather, the ensuing description will provide those skilled in the art with an enabling description for implementing the described embodiments. It being understood that various changes may be made in the function and arrangement of elements without departing from the spirit and scope of the appended claims.

Embodiments of the present disclosure are contemplated to be deployed in a variety of environments, such as a datacenter environment. While embodiments may be described in connection with certain examples of datacenter environments, it should be appreciated that embodiments of the present disclosure are not so limited. Indeed, embodiments of the present disclosure contemplate the ability to the disclosed structures in any number of environments including a datacenter environment or any other suitable environment in which machine-to-machine communications are facilitated.

Furthermore, it should be appreciated that the various links connecting the elements can be wired, traces, or wireless links, or any appropriate combination thereof, or any other appropriate known or later developed element(s) that is capable of supplying and/or communicating data to and from the connected elements. Transmission media used as links, for example, can be any appropriate carrier for electrical signals, including coaxial cables, copper wire and fiber optics, electrical traces on a PCB, or the like.

At least one example embodiment relates to silicon photonics technologies and applications. For silicon (Si) waveguides in silicon photonics applications, high optical power leads to non-linear loss due to a combination of two-photon absorption (TPA) and free-carrier absorption (FCA). This additional non-linear loss reduces the optical link budget and can lead to irreversible physical damage to the waveguides, resulting in system failure.

Embodiments of the present disclosure propose to address these problems by introducing a new type of waveguide design that reduces optical losses as well as irreversible physical damage to the waveguide.

A waveguide according to at least one embodiment has one or more of the following properties: 1) an enlarged the cross-sectional area of the waveguide, for example, by widening the outer edges of the waveguide (the "ridge" or "rib") - at a constant carrier generation rate, the larger cross-sectional area reduces the local carrier density since the carriers are now spread across a wider area; 2) a modified the silicon crystal structure away from the optical mode (core of the waveguide) to increase the recombination rate (e.g., due to Shockley-Read-Hall recombination), thus decreasing the carrier lifetime and decreasing the local carrier density and thus their ability to absorb light- an example of an effective crystal modification is adding silicidation (e.g., an undoped silicide) to surfaces of the outer ridges or ribs of the waveguide. The undoped silicide layer may be added to the top surface of these wide outer ribs. This material modifies the silicon crystal structure, dramatically increasing the recombination rate of free carriers and shortening their effective lifetime from ~55ns down to ~2ns. This removes them before they can cause significant absorption. The widening of the ribs also helps to dissipate heat more effectively, lowering the temperature of the core. These properties may be implemented in a standard waveguide layer (i.e., silicon) without introducing new process steps. In addition, waveguides according to embodiments work passively, meaning that the advantages (e.g., reduced waveguide damage) are obtained even when no power is applied to the chip (i.e., without requiring a power source), unlike reverse-biased PIN junctions which require an active voltage. This is not the case for the two existing approaches to deal with high optical power, which involve using silicon nitride that requires the introduction of a new process step or using a reverse biased PIN junction that requires an active voltage source to function.

Illustrative computing environments and components which may be relevant to or used in conjunction with various waveguides described below with reference to the figures. Such environments may include datacenters, high performance computing clusters, and/or the like are often formed of various computing components or networked devices, and communication networks formed of electrical and/or optical devices may be used to enable communication between the networked devices forming these implementations.

As described herein, optical waveguides, such as the silicide and/or increased area waveguide structure(s) described herein, may be employed for fast and reliable communication between components of the systems described herein. Such waveguides may be implemented with Silicon Photonics (SiP), which is a technology that enables optical systems to be manufactured using silicon processes with silicon as the optical medium. Various optical components, such as interconnects and signal processing components, may be fabricated and integrated in a single SiP device. Some SiP devices are fabricated on a silica substrate or over a silica layer on a silicon substrate, a technology that is often referred to as Silicon on Insulator (SOI). In some optical systems, a SiP device is attached to an external device to facilitate optical communications.

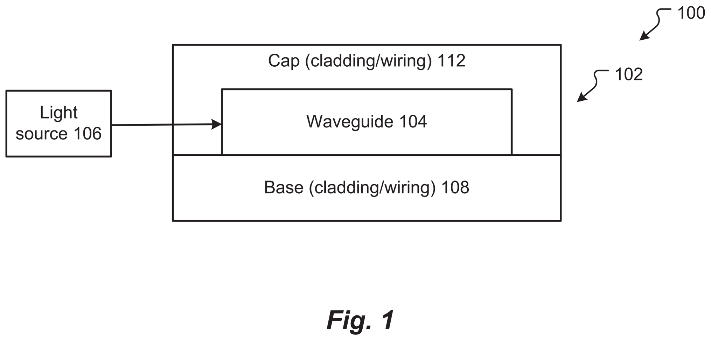

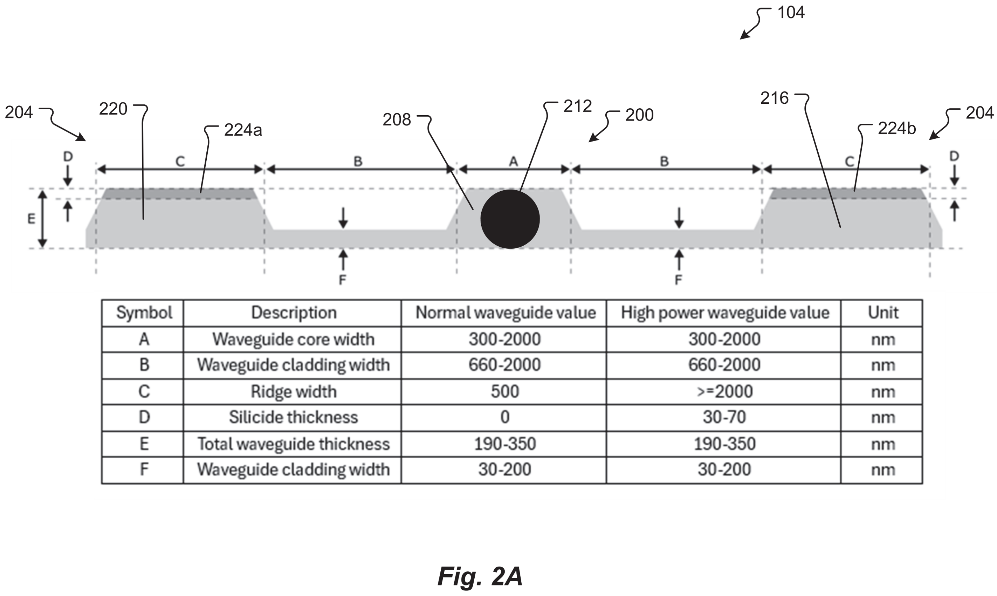

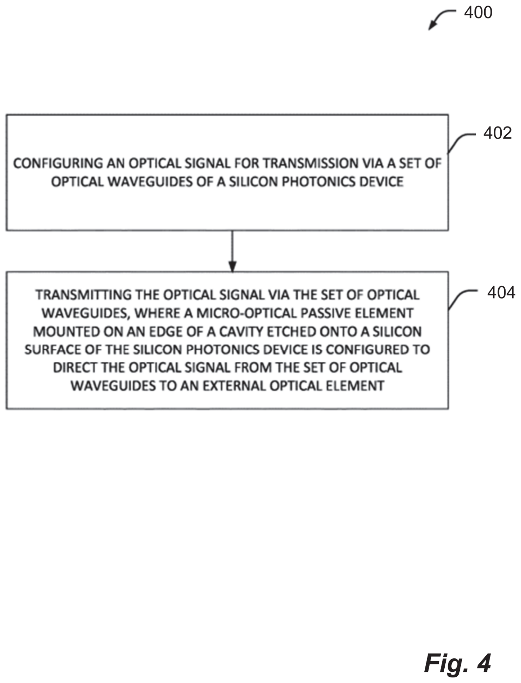

Fig. 1 illustrates a block diagram of an optical system 100 according to at least one example embodiment. The system 100 includes an optical device 102 in optical communication with a light source 106. The light source 106 may include a VCSEL or a plurality of VCELs or other suitable source of light, and one or more circuits for modulating the light with data for transmission to an endpoint within a network. Such optical signals may be output to a waveguide 104 of the optical device 102 either directly or through one or more other optical transmission lines, such as an optical fiber or SiP waveguide that connects the light source 1006 to the waveguide 1004. Although not explicitly shown, the optical device 102 may be included in and/or connect with one or more optical interfaces of devices within a network described and shown with reference to Figs. 4-13, such as a switch (e.g., an Ethernet switch, an Infiniband switch, etc.), a network adapter (e.g., a Network Interface Card or Controller (NIC)), a server, and/or the like. The optical device 102 may be included in an optical chip, such as a silicon photonics chip that is integrated with electrical processing circuitry (e.g., an electrical integrated circuit (EIC)), and/or the light source 106. The optical device 102 may comprise a base 108 of cladding and/or wiring layers with conductive wirings formed of a conductive material, such as copper, aluminum, or other suitable material, on which the waveguide 104 is disposed. The optical device 102 may further comprise a cap 112 comprised of additional cladding and/or wiring layers formed over the waveguide 104. Details of the waveguide 104 will now be discussed with reference to Figs. 2A-2C.

According to the cross-sectional view in Fig. 2A, the waveguide 104 may comprise an inner section 200 comprising a multi-ribbed or multi-ridged structure including an inner rib (or ridge) 208 which forms at least part of a core 212 that corresponds to or implements an optical mode of the waveguide 104 through which optical signals propagate along the waveguide 104 in a propagation direction. The waveguide 104 may further comprise an outer section 204 spaced apart from the inner section 200 by thinner parts of the waveguide 104 with thickness F. For example, the outer section 204 may comprise first and second outer ribs (or ridges) 216 and 220 spaced apart from opposing first and second sides of the inner rib 208. As may be appreciated, the optical mode of the waveguide 104 is primarily confined to the inner rib 208.

The outer ribs 216 and 220 and the inner rib 208 may have substantially the same height or thickness E while the sections in between the inner rib 208 and each outer rib may have substantially the same height or thickness F. As described in more detail below, the outer section 204 may further comprise a silicide layer disposed thereon or formed therein. In at least one example, the thickness of the silicide layer D is substantially uniform and/or the same over the outer ribs 216 and 220. As also shown, the top surfaces of the inner rib 208 and outer ribs 216 and 220 are substantially planar and may be coplanar with one another. The top surfaces of the waveguide between the inner rib 208 and each outer rib 216 and 220 may also be substantially planar and coplanar with one another. Each of the inner rib 208 and the outer ribs 216 and 220 may have angled sidewalls that extend from each top planar surface. Each angled sidewall may be angled at substantially the same angle. As shown in Fig. 2A, the outer sidewall of each outer rib 216 and 220 may terminate where the sidewall surface becomes vertical at the thickness F.

In accordance with embodiments of the present disclosure, the waveguide 104, including the inner rib 208 and the first and second outer ribs 216, 220, may be a one piece structure formed of a substantially same material. For example, the waveguide 104 shown in Fig. 2A, including the inner rib 208 and the first and second outer ribs 216, 220 and sections in between the inner rib 208 and outer ribs 216, 220 may be formed of or comprise silicon while the surrounding material of the base 108 and/or cap 112 may comprise a suitable cladding, such as an insulator with a different (e.g., lower) refractive index (e.g., silicon dioxide). As noted above, the base 108 and/or the cap 112 may comprise one or more wiring layers for connecting to electrical circuits which process electrical signals within the optical device 102 or external to the optical device 102.

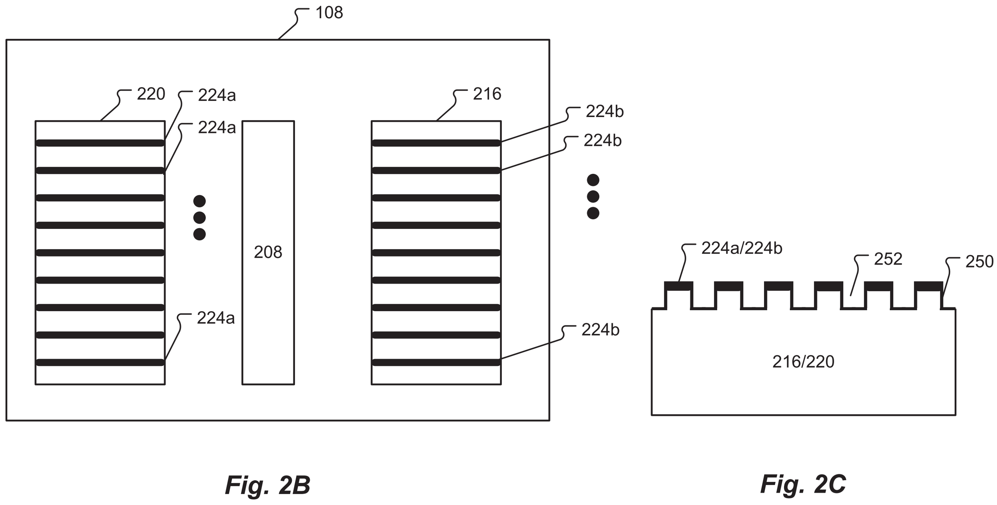

Although the ribs 208, 216, and 220 of the waveguide 104 may be formed of the same material, it should be appreciated that the first and second outer ribs 216, 220 have at least one structural feature different from the inner rib 208. For example, as may be derived from the dimension ranges illustrated in Fig. 2A, the at least one structural feature may correspond to the first and second outer ribs 216, 220 having cross-sectional areas different from a cross-sectional area of the inner rib 208. In some examples, the cross-sectional areas of the first and second outer ribs 216, 220 are each greater than the cross-sectional area of the inner rib 208, such as by virtue of the first and second outer ribs 216, 220 each being wider than the inner rib 208 (e.g., in a plan view and/or in a cross-sectional view with widths C and A shown in Fig. 2A). That is, when measured at a same horizontal level of the waveguide, widths of the first and second outer ribs 216, 220 may be greater than a width of the inner rib 208. In some examples, widths of the outer ribs 216, 220 are the same or substantially the same (with "substantially" as used herein intending to cover variations due to manufacturing and/or design tolerances). Example embodiments are not necessarily limited to increasing the cross-sectional area of the outer ribs via width increases. In some cases, such as that shown in the side view of Fig. 2C, the first and second outer ribs 216, 220 comprise a plurality of protrusions 250 and/or recesses 252 that effectively increase cross-sectional surface area.

In some examples, the at least one structural feature which distinguishes the outer ribs 216, 220 from the inner rib 208 includes an additional layer 224a, 224b on the first and second outer ribs 216, 220. The additional layer may comprise a compound semiconductor layer, which may include a silicide comprising silicon and an electropositive element such as one or more of cobalt, copper, nickel, tungsten, or other suitable material (e.g., metal) used for silicides. Such a silicide layer 224a, 224b may be undoped and have a thickness D and be formed by deposition of one of the aforementioned metals on top surfaces of the ribs 216, 220 followed by an annealing process. A silicide layer 224a, 224b may extend continuously in a uniform layer on a top surface of a respective outer rib 216, 220 along the entire length of or along a partial length of the respective outer rib 216, 220. In the examples of Figs. 2B and 2C, the silicide layers 224a, 224b are formed in segments on the outer ribs 216 and 220. In some examples, such as that shown in the plan view of Fig. 2B, the silicide layers 224a, 224b are formed as segments in the substantially planar surfaces of outer ribs 216, 220 such that each outer rib 216, 220 includes sections of silicide spaced apart from one another by sections of outer rib (e.g., silicon sections) that do not include silicide. In other examples according to Fig. 2C, the silicide layers 224a/224b may be formed on the protrusions 250 (shown) or as continuous layers that cover the protrusions 250 and recesses 252. In still further examples, silicide layers 224a, 224b exist only at locations on the outer ribs 216, 220 where losses are known to occur, such as at an optical signal input of the optical device 102, an optical signal output of the optical device 102, or other area along the outer ribs where losses are known to occur. Although silicide layers are described as an example, it should be appreciated that the silicide layers may be substituted for one or more other layers that have the same or similar properties as silicide and/or that lead to the same effects as the silicide layers described herein. In addition, the structures shown in Figs. 2A-2C may be combined with one another.

Still with reference to Fig. 2A, it should be appreciated that widths of the first and second outer ribs 216, 220 may be greater than or equal to a width of a space between the inner rib 208 and at least one of the first and second outer ribs 216, 220, where such space corresponds to or closely corresponds to measurement B in the table of Fig. 2A. As may be appreciated from the chart in Fig. 2A, widths C of the first and second outer ribs 216, 220 are at least seven times greater than a largest thickness E of the waveguide 104 and at least ten times greater than a thinnest portion F of the waveguide 104.

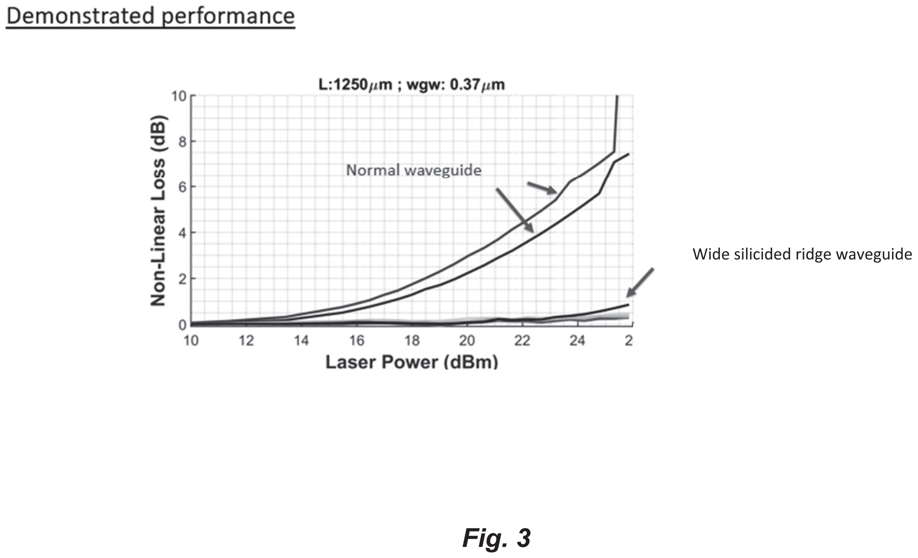

Fig. 3 illustrates a graph of non-linear loss vs. optical power (e.g., laser power) to compare a waveguide 104 with silicide layers 224a, 224b at outer ribs thereof to a waveguide without silicide layers. In particular, Fig. 3 shows significantly reduced non-linear losses for a waveguide 104 having wider outer ribs and/or the silicide layers 224a, 224b on the outer ribs or ridges. Such reduction in losses may be due to electrons and holes, generated by TPA, spreading to the outer ribs of the waveguide in the presence of the silicide layers, thus increasing the recombination rate of the electrons and holes (e.g., a recombination rate of 100 picoseconds) and reducing the density of electrons and holes that could interfere with light propagating in the core 212. In addition, losses sustained due to irreversible damage to the waveguide 104 are also reduced compared to waveguides without the same or similar outer rib modifications. For example, it has been shown that a waveguide 104 with wider outer ribs and/or silicide layers 224a, 224b possesses reduced permanent damage (e.g., damage due to FCA) compared to waveguides without silicide layers. These advantageous effects are achieved without applying an external bias to the waveguide (e.g., like PIN waveguide designs) and may be accomplished with ease using existing fabrication processes.

Fig. 4 is a flowchart illustrating an example method 400 for providing optical communications via a silicon photonics device in accordance with one or more embodiments of the present disclosure. It will be understood that each block of the flowcharts, and combinations of blocks in the flowcharts, may be implemented by various means. In some example embodiments, certain ones of the operations herein may be modified or further amplified as described below. Moreover, in some embodiments additional optional operations may also be included. It should be appreciated that each of the modifications, optional additions, or amplifications described herein may be included with the operations herein either alone or in combination with any others among the features described herein. The operations illustrated in Fig. 4 may, for example, be performed by a computing system which employs or that is operably connected to a waveguide according to Figs. 1-3 to carry optical signals. In one or more embodiments, at operation 402, the computing system configures an optical signal for transmission via a set of optical waveguides of a silicon photonics device. In one or more embodiments, at operation 404, the computing system transmits the optical signal via the set of optical waveguides, where a micro-optical passive element mounted on an edge of a cavity etched onto a silicon surface of the silicon photonics device is configured to direct the optical signal from the set of optical waveguides to an external optical element.

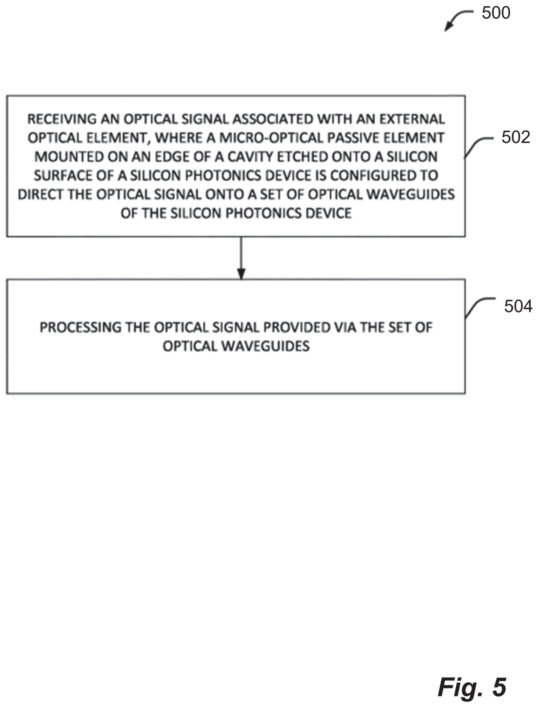

Fig. 5 is a flowchart illustrating an example method 500 for providing optical communications via a silicon photonics device in accordance with one or more embodiments of the present disclosure. It will be understood that each block of the flowcharts, and combinations of blocks in the flowcharts, may be implemented by various means. In some example embodiments, certain ones of the operations herein may be modified or further amplified as described below. Moreover, in some embodiments additional optional operations may also be included. It should be appreciated that each of the modifications, optional additions, or amplifications described herein may be included with the operations herein either alone or in combination with any others among the features described herein. The operations illustrated in Fig. 5 may, for example, be performed by a computing system which employs or that is operably connected to a waveguide according to Figs. 1-3 to carry optical signals . In certain embodiments, the computing system can be embedded in an EIC. In one or more embodiments, one or more of the operations illustrated in Fig. 5 may, for example, be performed by an EIC. In one or more embodiments, at operation 502, the computing system receives an optical signal associated with an external optical element, where a micro-optical passive element mounted on an edge of a cavity etched onto a silicon surface of a silicon photonics device is configured to direct the optical signal onto a set of optical waveguides of the silicon photonics device. In one or more embodiments, at operation 504, the computing system processes the optical signal provided via the set of optical waveguides.

As may be appreciated, optical interconnects, which may be implemented with SiP technology, are used to connect between chips or between different communication systems. For example, optical interconnects may provide optical interconnecting for network interface controller (NIC) to switch, switch to switch, and/or chip to chip. Optical interconnects can be used in a variety of applications, such as switches, processing units (e.g., graphics processing units (GPUs), etc.). An optical interconnect can include an optical link (e.g., optical fiber, SiP waveguide) to transmit an optical signal. Optical interconnect bandwidth can be scaled by transmitting an optical signal including multiple wavelengths using the same optical link. In doing so, the transmitter is tuned to generate the optical signal including multiple carrier wavelengths. Moreover, each modulator of a modular array can be tuned to receive and modulate a respective carrier frequency. Ordering the multiple wavelengths can be important to ensure that the transmitter and receiver are properly communicating data contained within the optical signal.

In at least one example embodiment, an optical interconnect is part of a datacenter that corresponds to a collection of network devices, such as network switches (e.g., Ethernet switches, IP routers, multiservice platforms, various transmission network elements, legacy communication equipment, or in any other suitable communication system) connected with a collection of servers or compute nodes. A switch fabric serves to transfer the data between the switch ports. A switch fabric comprises one or more interconnect circuits, which may be arranged in various switch fabric architectures, e.g., m*m crossbar, Banyan, Benes, Omega, Clos, multi-plane, STS, TST, shared memory, buffered crossbar, any other suitable blocking or non-blocking architecture, or any applicable mixed architecture thereof. A switch fabric is realized in typical embodiments by hardware, which may comprise Field-Programmable Gate Arrays (FPGAs) and/or Application-Specific Integrated Circuits (ASICs), and in some implementations also bus interconnects. The datacenter may adhere to a networking topology (e.g., a hierarchal networking topology), such as a fat tree topology, a Slim Fly topology, a Dragonfly topology, and/or the like. The datacenter routes traffic amongst the network switches and servers therein, and at least one layer of the topology in the datacenter is coupled to the communication network to allow networking traffic to flow between the datacenter and the network device(s).

An optical interconnect may include a substrate and an electro-optical component (VCSEL, photodiode, etc.) supported by the substrate and configured to convert between electrical and optical signals. An optical interconnect may further include a transmission block defining a receiving surface configured to receive an optical fiber, and a waveguide configured to transmit optical signals between the electro-optical component and the receiving surface such that in an operational configuration in which the receiving surface receives an optical fiber, the electro-optical component and the optical fiber are in optical communication.

Some or all of an optical interconnect may be supported or enclosed by any suitable housing used in communications systems to protect the components supported therein (e.g., as part of Quad Small Form-factor Pluggable (QSFP) connectors, Small Form Pluggable (SFP) connectors, or the like). Furthermore, the substrate hosting the electro-optical component may be substantially rectangular shape and/or may be dimensioned (e.g., sized and shaped) for use in any communication system regardless of geometric constraints (e.g., L-shaped, squared-shaped, etc.).

In various embodiments, an optical interconnect for receiving an optical fiber may be implemented in a flip-chip configuration. In certain embodiments, the optical interconnect is configured as a flip-chip component such that a longitudinal axis of the first adiabatic transition profile of the optical interconnect and a longitudinal axis of the second adiabatic transition profile of the optical interconnect may be collinear. Said differently, the orientation of the optical interconnect in such an embodiment does not require a mirror or other reflective surface to redirect optical signals between the electro-optical component and the receiving surface. As would be evident to one of ordinary skill in the art in light of the present disclosure, however, the optical interconnect in a flip-chip configuration may also include one or more mirrors (e.g., reflective surfaces) to accommodate optical fibers received at varying angles.

In some optical interconnect embodiments, only mirrors may be operationally configured to redirect light given that at some bending radii, light may remain confined to the waveguide. Accordingly, embodiments of a field replaceable modular optical interconnect unit are described that are configured to be received by a main switch system box. The field replaceable modular optical interconnect unit comprises a housing comprising at least a front panel, a rear panel, and side panels extending between the front and rear panels, a printed circuit board assembly supported within the housing, an optical module supported on the printed circuit board assembly and configured to convert between optical signals and corresponding electrical signals for respectively transmitting or receiving optical signals through a fiber optic cable or SiP waveguide, a board-to-board connector disposed on the rear panel of the housing and configured to enable electrical signals to be transmitted between the printed circuit board assembly and a main switch system box, and an external connector disposed on the front panel of the housing and configured to engage an external optical fiber for transmitting optical signals between the optical module and an external component. The field replaceable modular optical interconnect unit may be configured to be electrically connected to the main switch system box via engagement of the board-to-board connector with a corresponding connector of the main switch system box when the housing is received by the main switch system box.

In some embodiments, the optical module may be a mid-board optical module (MBOM), and/or the field replaceable modular optical interconnect unit may comprise a plurality of external connectors. For example, the external connector may be a first external connector, and the field replaceable modular optical interconnect unit may further comprise a second external connector disposed on the front panel of the housing and configured to enable transmission of electrical signals between the printed circuit board assembly and an external component connected thereto.

An optical interconnect typically comprises a driver circuit which drives an electro-optical element such as a light emitter (typically with a binary signal), a waveguide (typically an optical fiber or SiP waveguide), and a receiver. An optical interconnect is typically composed by a transceiver module in each end adapted to transmit optical information along one or two optical fibers and/or waveguides. The transmitter of each transceiver typically comprises a driver circuit coupled to a light source and a receiver circuit coupled to a photo detector. A driver circuit (often located on a driver chip) is a circuit tailored to generate a waveform appropriate to drive a light emitting device in response to an input signal which is typically a binary data stream. The combination of a driver circuit and a light source is referred to as a transmitter. A receiver circuit (often located on a receiver chip) is a circuit tailored to receive the output from the light detector and generate a corresponding binary data stream. The combination of a receiver circuit and a photodetector is referred to as a receiver. Often the receivers and transmitters provide multiple channels, i.e., the ability to transmit or receive via multiple light sources or photodetectors. Sometimes driver and receiver circuits are combined on the same chip which is then referred to as a transceiver chip. Besides driver, receiver and/or transceiver chips, optical modules may comprise further chips and electronics such as e.g., a microcontroller. Typically, the binary signal used in such optical links is an amplitude modulated NRZ signal but other signal types are in principle possible.

Vertical Cavity Surface Emitting Laser (VCSEL) diodes may be utilized as light emitters to transmit binary data over optical fibers and/or SiP waveguides. However, the light source may in principle be any suitable light source and the transmitted waveform may be any suitable waveform for transmitting information. Most light emitters have a threshold current above which they substantially begin to emit light. Increasing the current driven through the emitter from zero to above said threshold may be time consuming, and therefore a bias current is typically driven through the light source. Often the bias current is set just below, at the threshold or above the threshold, but it may also be set to be well above threshold. This bias current is often programmable so that the same circuit design may be utilized to drive different light emitters and/or be used for different applications. Additional time varying current which modulates the emission from the light emitter is referred to as the modulation current.

Some embodiments provide an electro-optical (EO) interconnect assembly comprising a pair of pluggable EO transceivers connected at respective ends of an optical fiber. The EO transceivers may be used to connect network-connected devices (e.g., remote client switches, network adapters such as Network Interface controllers (NICs) and Host Channel Adapters (HCAs), Smart-NICs (NICs having embedded CPUs), network-enabled Graphics Processing Units (GPUs), and the like). The terms "network-connected device" and "network device" are used interchangeably herein. In certain embodiments, an optical interconnect includes a substrate, one or more optical waveguides, one or more first micro-lenses, one or more second micro-lenses, and first and second mechanical fixtures. Moreover, when designing an optical interconnect module, it is highly desirable to place the EO component driving circuitry in close proximity to the EO transducers, in order to maintain high signal integrity. As a result, however, heat generated in the driving circuitry may increase the junction temperatures of the transducers and thus degrade their performance.

In order to resolve the above-described heat removal issues, optical interconnect modules comprise cooling elements that are highly-integrated with the other elements of the optical interconnect module. In particular, the optical interconnect module typically comprises a light coupling module for coupling the optical signals between the optical fibers and the optoelectronic transducers. The light coupling module comprises light coupling elements such as micro-lenses or prisms. This light coupling module additionally serves as a baseplate for the cooling elements. The resulting mechanical design is extremely compact and yet efficient in removing heat. The light coupling module is also referred to herein as an integrated optical cooling core.

The disclosed systems and methods may be implemented using co-packaged optical (CPO) solutions integrated with electronic switch ASICs, network processors, or AI accelerators. Optical components such as modulators, drivers, photodetectors, and laser sources may be co-packaged directly on or near the host silicon using advanced packaging technologies including 2.5D interposers or silicon bridges.

In some configurations, mid-board optical modules (MBOMs) are employed as part of the optical I/O strategy. MBOMs are positioned centrally on the PCB-between the front panel and the host die-enabling shorter electrical traces and improved signal integrity while maintaining separation between optics and high-power ASICs for thermal management.

Near-packaged optics may also be used, placing optical engines in close proximity to the host device without full co-packaging, allowing for modular deployment and gradual migration from pluggable optics.

The system may support optical connectivity through edge couplers, fiber ribbon interfaces, or on-board photonic waveguides. Silicon photonics may be used to implement optical engines within the CPO or MBOM units, with support for modulation schemes such as PAM4, coherent signaling, or WDM.

These components may be interconnected via high-speed electrical interfaces such as SerDes lanes, and coordinated via on-board controllers that handle lane training, optical power tuning, and health monitoring.

Embodiments may scale from 400G to 1.6T and beyond, supporting deployment in high-performance computing, AI clusters, and data center switching platforms. Integration strategies may include air-cooled and liquid-cooled packages, supporting advanced thermal designs to handle the combined electrical and optical power densities.

The system may be implemented in modular switch platforms, AI training fabrics, or other environments requiring high-density, low-latency interconnect.

One or more embodiments of the present disclosure are applicable to co-packaged optics assemblies, such as a multichip-module (MCM) assembly. Co-packaging may refer to the close integration of different electrical and/or optoelectronic chips in the same package.

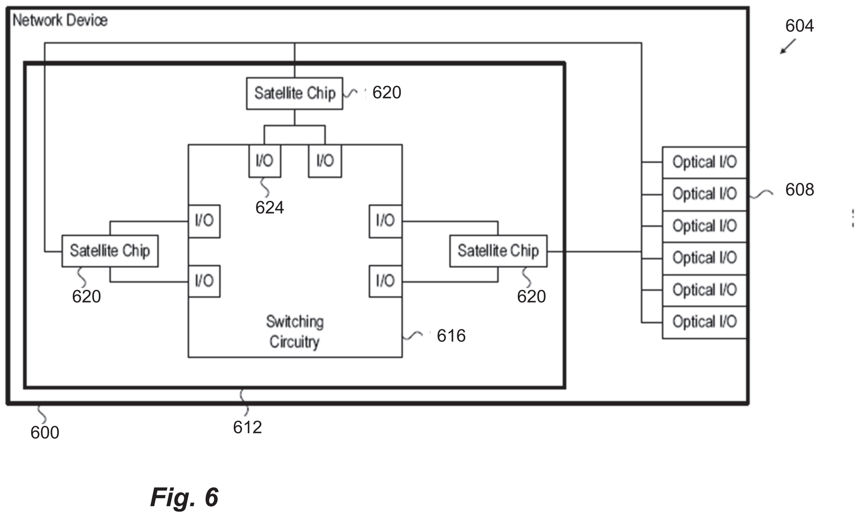

Fig. 6 is a block diagram that schematically illustrates a co-packaged networking device 600, in accordance with an embodiment that is disclosed herein. The different chips that constitute a co-packaged networking device are assembled on a single substrate in what is typically called the MCM assembly 612. The MCM assembly 612 can include a switching circuitry 616 surrounded by peripheral or satellite chips 620. In some embodiments, the switching circuitry 616 and surrounding satellite chips 620 are all mounted on a common substrate, although such a configuration is not required. The MCM assembly 612 may be provided in a larger housing of the networking device 600, positioned behind the front panel 604. The switching circuitry 616 may include one or more core digital Application Specific Integrated Circuits (ASICs), CPUs, GPUs, Parallel Processing Units (PPUs), microprocessors, FPGAs, combinations thereof, and the like. The switching circuitry 616 may include a number of input ports and/or output ports 624. The Input/Output (I/O) ports 624 may include electrical ports and/or optical ports. Additionally, the switching circuitry 616 may include a combination of electrical blocks and optical blocks. The electrical blocks of the switching circuitry 616 may include a number of electrical switches that are configured to route signals in an electrical domain. The optical blocks of the switching circuitry 616 may include a number of optical components that are configured to generate, detect and route signals in an optical domain. The MCM assembly 612, in some embodiments, may concern or include multiple satellite chips 620 that are assembled on the same substrate as the switching circuitry 616. In some embodiments, a configuration of the optical block(s) and a configuration of the electrical block(s) depends (e.g., is based on) on the number of optical ports in the I/O ports 624.

As discussed above, optical I/Os 608, which may also be referred to as optical connectors, are placed at the front panel 604. As mentioned above, connectivity between the MCM assembly 612 and optical I/Os 608 may be transferred to the front panel 604 through optical fibers. This connection may be made directly with an optical I/O 624 of the switching circuitry or may be made with one or more of the satellite chips 620. The connection is often made with one or more of the satellite chips 620 because the satellite chips 620 may include the electro-optic converters and, possibly, the SERDES to natively support the connection.

The satellite chips 620 may include one or more of a DSP processor, driver, transimpedance amplifier, laser, modulator, photodiode, serializer-deserializer, or the like. Some embodiments of the present disclosure are directed to a multi-chip module (MCM) with a centrally positioned main die and a plurality of peripherally positioned MCM sockets configured to mechanically receive and electrically connect mezzanine packages, which may include co-packaged optics (CPO) packages and co-packaged copper (CPC) packages. Each mezzanine package may include a package substrate including a connector portion that is configured to engage the MCM socket and a main portion extending beyond the periphery of the MCM substrate. The main portion of the mezzanine package may be configured to receive optical devices and/or integrated circuits, such as via mezzanine sockets, to allow connections to be made between the optical devices and/or integrated circuits/RF copper cable connectors and the main die of the MCM. Due to the extension of the mezzanine package beyond the periphery of the MCM substrate, the physical size of the MCM substrate may remain small to reduce cost and avoid the previously discussed production challenges, while allowing connections to a number of optical devices and integrated circuits via the mezzanine packages, which occupy the relatively inexpensive space around the periphery of the MCM substrate.

As used herein, the terms "co-packaged optic" (or "CPO") and "co-packaged copper" (or "CPC") may refer to an advanced heterogeneous integration of either optics and silicon or copper and silicon, in which either integration may be implemented on a single packaged substrate. The CPO may utilize pluggable optical modules that include an optical engine (OE) to convert optical signals to electrical signals and electrical signals to optical signals. The CPO may further be comprised of an optical component on a photonics die and an electrical component on an electrical die.

In some embodiments, alternative structures, such as contacting from the backside or using 3D stacking technologies, can be used to avoid crossing metal layers on top of the waveguide.

A photonic neural network (PNN) system may include a number of optical interconnect structures. Optical interconnects may utilize embedded waveguides, photonic integrated components, or optical fibers coupled through grating couplers or edge couplers to provide low-latency, high-bandwidth communication. The optical interconnect structure may be configured to transmit/receive an optical signal (e.g., light), and direct or otherwise guide the optical signal via optical waveguides from/to one or more optical devices (e.g., modulators and photodetectors). In some scenarios, these optical waveguides may be formed in a single level. In consideration of saving a total area occupied by the corresponding photonic die, such optical waveguides may be formed (e.g., stacked) across multiple levels. When being stacked, each of the waveguides typically has a certain portion vertically overlapped with (a portion) of a neighboring waveguide. Each of the waveguides may be formed as having a transitioning portion interposed between two tapered portions to optically communicate with each other and assure the optical signal propagated therein can be saturated.

In at least one embodiment, a datacenter may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic are used to perform inferencing and/or training operations associated with one or more embodiments. In at least one embodiment, inference and/or training logic may be used in a larger system for inferencing or predicting operations based, at least in part, on weight parameters calculated using neural network training operations, neural network functions and/or architectures, or neural network use cases described herein.

In at least one embodiment, an artificial intelligence (AI) data center infrastructure platform is provided. Examples of an AI data center infrastructure platform are Nvidia^{®} DGX^{™} SuperPOD^{™} and DGX^{™} Foundry. In at least one embodiment, an AI data center infrastructure platform provides accelerated infrastructure and/or scalable performance tailored for AI such as machine learning (ML) and other high-performance computing (HPC) loads.

An optical switch may include hardware and/or software for routing signals in the optical domain. Thus, in one embodiment, an optical switch may include input optical fibers and output optical fibers that carry optical signals as well as one or more devices suited for routing optical signals within the optical switch. For example, the one or more devices for routing optical signals may include one or more movable mirrors (e.g., MEMS mirrors) that are controlled to move in a manner that directs light from an input fiber to a desired output fiber or to move in a manner that forces or guides light from one waveguide into another waveguide. An optical switch may include one or more devices for amplifying light in order to compensate for propagation and scattering losses introduced by the optical switch. In at least one example embodiment, signals input and output to an ASIC are optical, meaning that each optical switch connected to an electrical switch routes optical signals received from the electrical switch without using hardware and/or software that converts an electrical signal into an optical signal for routing within the optical switch. However, example embodiments are not limited thereto, and an optical switch may include electrical to optical to electrical conversion hardware and/or software if desired (e.g., if the input signal and/or output signal is an electrical signal).

One type of optical modulation scheme for modulating light with data is a ring-based optical modulation scheme. A ring-based optical link is an optical link that integrates a ring modulator. A ring modulator is an optical component that can be used to modulate coherent optical carrier (e.g., coherent light) having a fixed wavelength. A ring modulator can include set of waveguides in which at least one waveguide is in the form of a closed loop ("ring waveguide") disposed between one or more bus waveguides. The ring waveguide can support one or more resonant wavelengths (or frequencies) in which photons having constructive or destructive interference with the photons coming from the bus waveguide. Thus, when the optical carrier in the bus is at the vicinity of resonant wavelength, field enhancement occurs in the ring waveguide due to constructive (or destructive) interference, resulting in high optical intensity. Since only a portion of the wavelengths of the optical carrier will be at resonance within the ring waveguide, the ring waveguide can function as an optical filter. Ring waveguides exploit phenomena such as total internal reflection and optical coupling, which can depend on the index of refraction of the material of the ring waveguide (e.g., silicon). In some implementations, a ring modulator is a micro-ring modulator (MRM).

In some examples, processing circuitry (e.g., firmware, hardware, and/or hardware executing software) can facilitate a method to tune ring modulators to wavelengths of coherent light using ring waveguide self-heating. For example, the processing circuitry can cause a heater to tune a ring waveguide of a ring modulator to a first resonance point and, upon tuning the ring waveguide to the first resonance point, disable the heater to cool the ring waveguide.

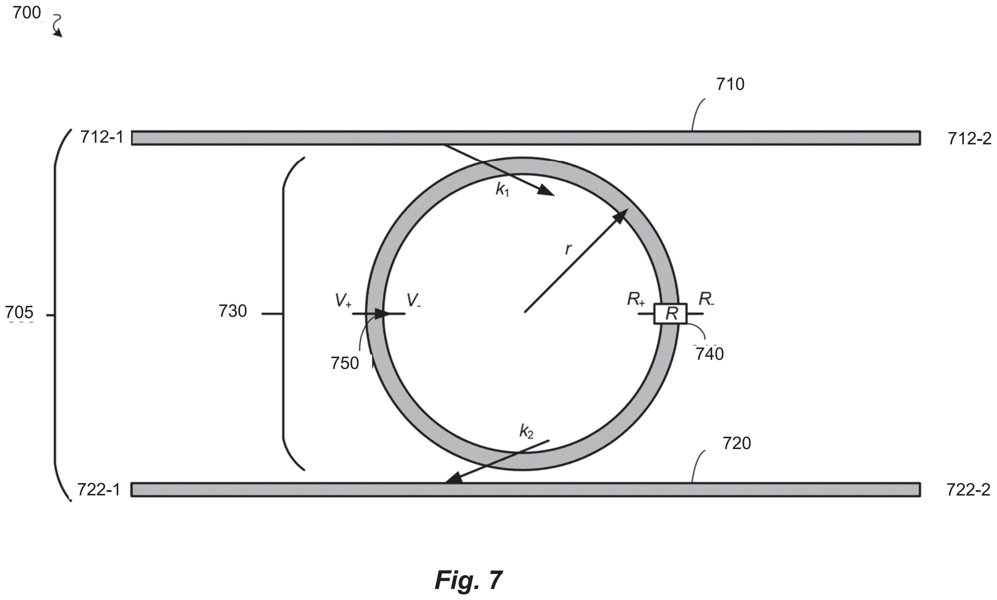

Fig. 7 illustrates an example system including a ring modulator 305, according to at least one example embodiment. For example, the ring modulator 705 can include a pair of bus waveguides 710 and 720. For example, the bus waveguide 710 can be a through bus waveguide and the bus waveguide 720 can be a drop bus waveguide. In some embodiments, and as shown in this illustrative example, the bus waveguides 710 and 720 are linear (e.g., horizontal) waveguides. However, the bus waveguides 710 and 720 can have any suitable shape in accordance with embodiments described herein.

The bus waveguides 710 and 720 can have respective ports, which can be used to address and probe the behavior of the ring modulator 705. As shown in this illustrative example, the bus waveguide 210 can have ports 712-1 and 712-2, and the bus waveguide 720 can have ports 722-1 and 722-2. For example, port 712-1 can be referred to as an input port, port 712-2 can be referred to as a through port, port 722-1 can be referred to as a drop port and port 722-2 can be referred to as an add port. Accordingly, in this illustrative example, the ring modulator 705 can be a four-port ring modulator.

The ring modulator 705 further includes a ring waveguide 730 disposed between the bus waveguides 710 and 720. The ring waveguide 730 is a closed-loop structure. The arrow "r" denotes the radius of the ring waveguide 730, as measured as the distance from the center of the ring to the center of the ring waveguide 730. The radius of the ring waveguide 730 can be on the order of micrometers or microns (µm) in some embodiments. In some embodiments, the radius of the ring waveguide 730 is between about 1 µm to about 10 µm.

The ring modulator ring modulator 705 is configured to receive at least one wavelength of radiation generated by a wavelength generator. In some embodiments, the at least one wavelength of radiation includes multiple wavelengths of radiation. For example, a tunable optical wave (e.g., laser light) having a number of wavelengths of radiation can be received in the port 712-1. The ring waveguide 730 can be tuned to a resonant wavelength (λ₀) such that photons having the resonant wavelength are coupled to the ring waveguide 730 and re-routed to the port 722-1, while photons not having the resonant wavelength pass through toward the port 712-2. Accordingly, the ring waveguide 730 can function as a spectral filter.

Illustratively, assume that a first photon having the resonant wavelength is received by the port 712-1. As this photon travels left to right, the first photon enters the ring waveguide 730 via optical coupling. If a second photon having the resonant wavelength is received by the port 712-1, the subsequent photon adds coherently (in phase and polarization and frequency) with the first photon that is already in the ring waveguide 730. This initiates a process referred to as field enhancement, in which photons having the resonant wavelength continue to build up within the ring waveguide 730. Arrow "*k*₁" denotes a first coupling coefficient corresponding to an amount of optical power coupled to the ring waveguide 730 from the bus waveguide 710 (e.g., percentage).

The waveguides 710-730 can be formed from any suitable material that has properties (e.g., index of refraction) to enable the optical coupling of light having the resonant wavelength within the ring waveguide 730. In some embodiments, the waveguides 710-730 are formed from a semiconductor material. For example, the waveguides 710-730 can be formed from silicon (Si). Alternatively, at least one of the waveguides 710-730 can be formed from a different material.

The field enhancement process described above cannot occur indefinitely. At a certain electrical field or optical power level, the number of photons having the resonant wavelength within the ring waveguide 730 can reach a saturation threshold and begin to radiate or couple out of the ring waveguide 730. Arrow "*k*₂" denotes a second coupling coefficient corresponding to an amount of optical power coupled from the ring waveguide 730 to the bus waveguide 720 (e.g., percentage).

The optical power level can be correlated with a quality factor of the ring modulator 705, *Q.* The quality factor *Q* is a dimensionless quantity that serves as a metric of "sharpness" of resonance or filtering achieved by the ring waveguide 730. The quality factor *Q* can be used to determine the average number of round-trip turns or cycles that a photon can make before leaving the ring waveguide 730 and entering the bus waveguide 720. For example, the quality factor *Q* can be directly (e.g., linearly) related to average photon lifetime, which is the average time that a photo will spend in the ring waveguide 730 before exiting. Accordingly, the higher the quality factor *Q*, the greater the average photon lifetime and number of round-trip turns. The quality factor *Q* can be inversely proportional to a full width at half maximum (FWHM) value of the transmission spectra observed to exit through the port 712-2. For example, *Q* = λ₀/FWHM. Here, the FWHM is the difference or distance between two wavelength values, observed at the port 712-2, having an optical power level determined to be equal to half of a maximum optical power value. For example, the optical power level can be modeled as a transfer function (e.g., Lorentzian). Accordingly, a greater FWHM value translates into a lower *Q* value.

At least one electrical component can be operatively coupled (e.g., integrated into) the ring waveguide 730 as a heater to tune the ring waveguide 730. For example, applying a voltage (e.g., bias) to the at least one electrical component can cause a modification to at least the index of refraction of the ring waveguide 730, which can tune the quality factor Q and thus tune the ring waveguide 730. The at least one electrical component can include any suitable electronic component(s) in accordance with embodiments described herein. In some embodiments, the at least one electrical component can include at least one of a diode, a resistor, or a transistor (e.g., field-effect transistor (FET)).

As shown, the at least one electrical component can include a diode 740. In some embodiments, the diode 740 is a P-N diode including a P-N junction between P-type semiconductor material and N-type semiconductor material. In some embodiments, the diode 740 is a P-I-N (or PIN) diode, in which intrinsic semiconductor material (I) is disposed between P-type and N-type semiconductor material. In some embodiments, the diode 740 can function as a delay adder. For example, when the diode 740 is in an off state (i.e., turned off), the ring modulator 705 can have an initial quality factor *Q* (*Q*₀), an initial FWHM (FWHM₀) and an initial average photon lifetime τ (τ₀). When processing circuitry causes an amount of positive voltage to be applied to the diode 740, the diode 740 can generate a corresponding number of charge carriers for injection into the ring waveguide 730. These charge carriers can modify the index of refraction of the ring waveguide 730 in a manner that increases the FWHM from the FHWM₀ to a new FHWM (FHWM₁). For example, a relationship can exist between charge carrier density and the index of refraction. The effect can be diminished as the positive voltage exceeds the threshold voltage for the diode. Since FHWM is inversely proportional to the quality factor *Q,* the FHWM₁ corresponds to a new quality factor *Q* (*Q*₁) that is less than *Q*₀. The decrease in the quality factor from *Q*₀ to *Q*₁ corresponds to a decrease in the average photon lifetime τ from τ₀ to a new average photon lifetime τ (τ₁). In this manner, the diode 740 behaves as a delay modification tool. Additionally or alternatively, in some embodiments, the diode 740 can function as a delay remover. For example, if the diode 740 is a P-N diode, then an amount of negative voltage applied to the diode 740 can expand the depletion region between the P-type semiconductor material and the N-type semiconductor material. This can cause removal of charge carriers from ring waveguide 730.

Additionally or alternatively, the at least one electrical component can include a resistor (e.g., resistive heater) 750. For example, when processing circuitry causes an amount of voltage to be applied to the resistor 750, the resistor 750 can tune the local temperature which tunes the on-resonance wavelength for the ring waveguide 730.

The diode 740 and the resistor 750 can tune the ring waveguide 730 with different amounts of granularity. For example, the diode 740 can be a fine-delay component and the resistor 750 can be a coarse-delay component. Moreover, multiple diodes, resistors, transistors, etc. that have respective sensitivities can be coupled to the ring waveguide 730. Accordingly, the at least one electrical component can include multiple electrical components to more accurately tune the at least one ring modulator in some embodiments.

The optical ring resonator can be operated as both a demultiplexer and a modulator. Electronics can encode data onto an optical channel. Such a method of operating the device results in an encoded optical channel being output on the output waveguide.

An integrated photonics device comprises a plurality of photonic components fabricated and co-located on a common substrate to guide, manipulate, generate, or detect optical signals. The device typically includes waveguides, modulators, couplers, filters, detectors, and one or more integrated light sources, such as lasers, forming a compact, monolithically or heterogeneously integrated photonic circuit.

The substrate may be formed from materials suitable for photonic integration, including but not limited to silicon, silicon nitride, indium phosphide, or other compound semiconductors. In some embodiments, the integrated laser is formed on the same substrate (monolithic integration), while in other embodiments, the laser is fabricated separately and bonded or coupled to the photonic circuit (hybrid or heterogeneous integration). The integrated laser may be a distributed feedback (DFB) laser, distributed Bragg reflector (DBR) laser, external cavity laser, or other suitable type depending on the target application.

The integrated laser provides an on-chip optical source, enabling self-contained optical transmission, modulation, and routing without reliance on external light sources. This allows for reduced system complexity, lower coupling loss, and improved scalability in densely packed photonic systems.

The integrated photonics device may further include electrical drivers and control circuitry co-packaged with the photonic components, forming a photonic-electronic integrated system. The design supports high-speed, low-power optical communication and signal processing across a range of applications, including data center interconnects, high-performance computing, telecommunications, optical sensing, and integrated LiDAR systems.

Packaging and coupling interfaces may be provided to facilitate optical I/O to and from the chip, such as edge couplers, grating couplers, or fiber array terminations. Thermal management structures may also be included to maintain performance stability of the integrated laser and surrounding photonic components.

Integrated photonics devices are designed to perform high-speed, low-latency signal processing or communication tasks with reduced power consumption and improved signal integrity, often serving applications in data communications, telecommunications, sensing, quantum technologies, or biomedical systems.

In certain embodiments, the photonic device may interface with electrical components, either on the same chip or through an adjacent electronic integrated circuit (EIC), to form a photonic-electronic co-integrated system. Packaging considerations may include fiber coupling interfaces, thermal management structures, and alignment features to ensure stable operation.

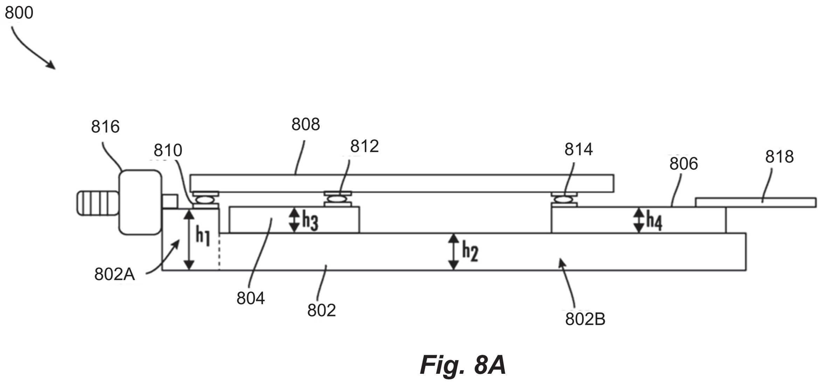

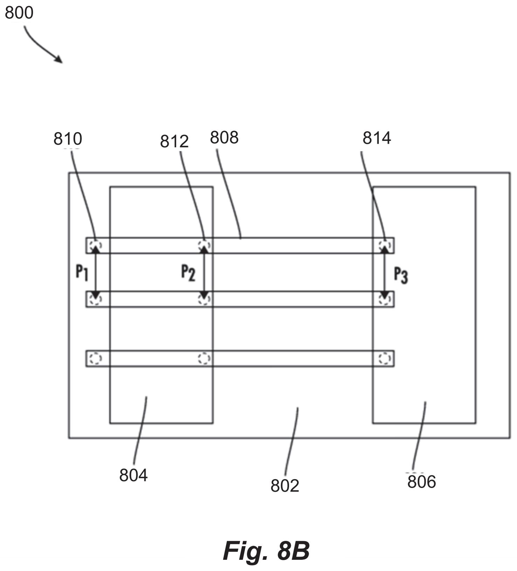

Figs. 8A and 8B illustrate a cross-sectional view and a top plan view, respectively, of an optoelectronic component 800. In some embodiments, the optoelectronic component 800 may include a substrate 802. The substrate 802, for example, may be a printed circuit board, a metal carrier, an organic carrier, and/or a ceramic carrier. In some embodiments, the height of the substrate 802 may vary. In this regard, for example, a first portion 802A of the substrate 802 may have a height h1 and a second portion 802B of the substrate 802 may have a height h2. In some embodiments, an electronic integrated circuit (EIC) 804 may be supported by the substrate 802. The electronic integrated circuit 804 may be any type of electronic integrated circuit. For example, the electronic integrated circuit 804 may be a digital signal processor, a modulator driver, and/or a transimpedance amplifier. In some embodiments, there may be more than one electronic integrated circuit supported by the substrate 802. In some embodiments, the electronic integrated circuit 804 may have a height h3. In some embodiments, the optoelectronic component 800 may support more than one electronic integrated circuit. In some embodiments, a photonic integrated circuit 806 may be supported by the substrate 802. The photonic integrated circuit 806 may be any type of photonic integrated circuit. For example, the photonic integrated circuit 806 may be an electro-optic modulator, a photodiode, a transmitter optical sub assembly and/or a receiver optical sub assembly. In some embodiments, the photonic integrated circuit 806 may comprise graphene. In some embodiments, there may be more than one photonic integrated circuit supported by the substrate 802. In some embodiments, the photonic integrated circuit 806 may have a height h4. In some embodiments, the heights h1, h2, h3, and h4 may be different. For example, depending on the electronic integrated circuit and photonic integrated circuit used, the height h3 may be greater that the height h4, or vice versa.

In some embodiments, the optoelectronic component 800 may include one or more optical fibers 818 connected to the photonic integrated circuit 806. The one or more optical fibers 818 may be configured to connect the optoelectronic component 800 to other optical components and/or devices. In some embodiments, a port 816 may be connected to the substrate 802. The port 816 may be configured to connect the optoelectronic component 800 to other electronic components and/or devices. In some embodiments, the optoelectronic component 800 may be configured to operate at speeds greater than 25 Gb/s.

The optoelectronic component 800 may include a plurality of substrate interconnect connectors 810 disposed on the substrate 802, a plurality of electronic integrated circuit interconnect connectors 812 disposed on the electronic integrated circuit 804, and a plurality of photonic integrated circuit interconnect connectors 814 disposed on the photonic integrated circuit 806. The plurality of substrate interconnect connectors 810, the plurality of electronic integrated circuit interconnect connectors 812, and the plurality of photonic integrated circuit interconnect connectors 814 may comprise any conductive material (e.g., conductive glue and/or solder). In some embodiments, the plurality of substrate interconnect connectors 810, the plurality of electronic integrated circuit interconnect connectors 812, and the plurality of photonic integrated circuit interconnect connectors 814 may be flexible. In other words, in some embodiments, the plurality of substrate interconnect connectors 810, the plurality of electronic integrated circuit interconnect connectors 812, and the plurality of photonic integrated circuit interconnect connectors 814 may be manipulated such that each may be capable of taking various shapes. In some embodiments, the plurality of substrate interconnect connectors 810 may have a pitch p1, the plurality of electronic integrated circuit interconnect connectors 812 may have a pitch p2, and the plurality of photonic integrated circuit interconnect connectors 814 may have a pitch p3. The pitch may refer to the distance between each of the plurality of interconnect connectors. In some embodiments, the pitch p1, pitch p2, pitch p3, may be different. For example, the pitch p2 of the plurality of electronic integrated circuit interconnect connectors 812 may be 1.25 mm while the pitch p3 of the plurality of photonic integrated circuits may be 1.5 mm.

In some embodiments, the optoelectronic component 800 may include a first plurality of cable connectors 808. In some embodiments, each of the first plurality of cable connectors 808 may be connected to and in communication with the substrate 802, the electronic integrated circuit 804, and the photonic integrated circuit 806 via respective interconnect connectors. In other words, the first plurality of cable connectors 808 may be connected to and in communication with the substrate 802 via the plurality of substrate interconnect connectors 810, the electronic integrated circuit 804 via the plurality of electronic integrated circuit interconnect connectors 812, and the photonic integrated circuit 806 via the plurality of photonic integrated circuit interconnect connectors 814. As such, the first plurality of cable connectors 808 may be used to facilitate communication between the substrate 802, the electronic integrated circuit 804, and the photonic integrated circuit 806.

In some embodiments, the first plurality of cable connectors 808 may define a first layout. In some embodiments, the first layout may define the overall connectivity of the optoelectronic component 800. For example, the connectivity defined by the first layout is such that an electronic integrated circuit (EIC) 804 is connected to a photonic integrated circuit 806 via a first plurality of cable connectors 808. In some embodiments, the first plurality of cable connectors 808 may be interchangeable with other pluralities of cable connectors that define different layouts. The different layouts may alter the overall connectivity of the optoelectronic component 800. For example, the first plurality of cable connectors 808 may be interchangeable with a second plurality of cable connectors that define a second layout which modifies the overall connectivity of the optoelectronic component 800. In this way, the optoelectronic component 800 may be easily modified to obtain desired capabilities by interchanging cable connectors.

In some embodiments, the first plurality of cable connectors 808 may be flexible. This may help ensure that the first plurality of cable connectors 808 may be used with a variety of substrates, electronic integrated circuits, and photonic integrated circuits. For example, the substrate, electronic integrated circuit, and/or photonic integrated circuit may be from different manufactures, may be a different type of integrated circuit or substrate, and/or may have different capabilities. For example, the substrate 802, electronic integrated circuit 804, and the photonic integrated circuit 806 may have different heights (e.g., height h3 of the electronic integrated circuit 804 may be greater than height h4 of the photonic integrated circuit 806). The flexibility of the first plurality of cable connectors 808 enables the first plurality of cable connectors 808 to bend as needed, such that components of the optoelectronic component 800 with different heights may be accommodated and connections may be made without any modifications to the configuration of the optoelectronic component 800 itself. Additionally, the flexibility of the first plurality of cable connectors 808 may enable the first plurality of cable connectors 808 to be used with a variety of substrates, electronic integrated circuits, and photonic integrated circuits that have interconnect connectors with different pitches. For example, if the pitch p2 of the plurality of electronic integrated circuit interconnect connectors 812 is less than the pitch p3 of the plurality of photonic integrated circuit interconnect connectors 814, the first plurality of cable connectors 808 may bend to account for the differences in pitch and connect the electronic integrated circuit 804 to the photonic integrated circuit 806.

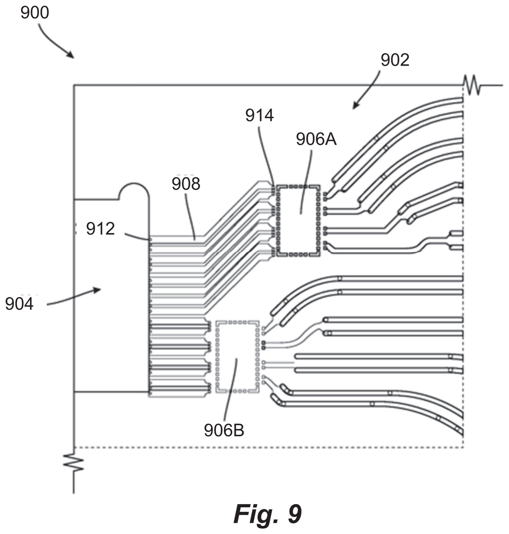

With reference to Fig. 9 a portion of an example optoelectronic component 900 is illustrated. For instance, the example optoelectronic component 900 may be part of a 1.6 Tb/s demonstrator or other suitable demonstrator. The example optoelectronic component 900 includes a substrate 902, an electronic integrated circuit 904 supported by the substrate 902, a first photonic integrated circuit 906A supported by the substrate 902, and a second photonic integrated circuit 906B supported by the substrate 902. The example optoelectronic component 900 may include a plurality of electronic integrated circuit interconnect connectors 912 disposed on the electronic integrated circuit 904 and a plurality of photonic integrated circuit interconnect connectors 914 disposed on the first photonic integrated circuit 906A and the second photonic integrated circuit 906B. The electronic integrated circuit 904 may be connected to and in communication with the first photonic integrated circuit 906A and the second photonic integrated circuit 906B via a plurality of cable connectors 908. In the example optoelectronic component 900, the electronic integrated circuit 904 and the first photonic integrated circuit 906A are situated on the substrate 902 such that the plurality of electronic integrated circuit interconnect connectors 912 and the plurality of photonic integrated circuit interconnect connectors 914 disposed on the first photonic integrated circuit 906A are not aligned with each other (e.g., one is not disposed directly opposite to the other). In such a situation, the flexibility of the plurality of cable connectors 908 facilitating communication between the electronic integrated circuit 904 and the first photonic integrated circuit 906A may allow the electronic integrated circuit 904 and the first photonic integrated circuit 906A to be connected through manipulation of the cable connectors to accommodate the misaligned locations.

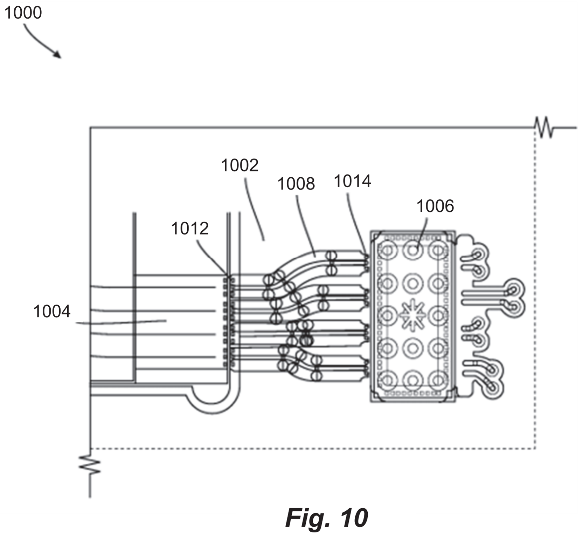

With reference to Fig. 10, another example optoelectronic component 1000 is illustrated. For example, the optoelectronic component 1000 may be part of an octal small form factor pluggable (OSFP) transceiver. The example optoelectronic component 1000 includes a substrate 1002, an electronic integrated circuit 1004 supported by the substrate 1002, and a photonic integrated circuit 1006 supported by the substrate 1002. The example optoelectronic component 1000 may include a plurality of electronic integrated circuit interconnect connectors 1012 disposed on the electronic integrated circuit 1004 and a plurality of photonic integrated circuit interconnect connectors 1014 disposed on the photonic integrated circuit 1006. The electronic integrated circuit 1004 may be connected to and in communication with the photonic integrated circuit 1006 via a plurality of cable connectors 1008. In the example optoelectronic component 1000, the pitch of the plurality of the electronic integrated circuit interconnect connectors 1012 and the plurality of photonic integrated circuit interconnect connectors 1014 is different. In this case, the flexibility of the plurality of cable connectors 1008 facilitating communication between the electronic integrated circuit 1004 and the photonic integrated circuit 1006 may be such that the electronic integrated circuit 1004 and the photonic integrated circuit 1006 can be connected despite the differences in pitch, such as through bending or other reshaping of the cable connectors to accommodate the differences.

In some embodiments, the optoelectronic component 800 may include a substrate 802. The substrate 802, for example, may be a printed circuit board, a metal carrier, an organic carrier, and/or a ceramic carrier.

The electronic integrated circuit (EIC) 804 may be any type of electronic integrated circuit. For example, the electronic integrated circuit 804 may be a digital signal processor, a modulator driver, and/or a transimpedance amplifier. In some embodiments, there may be more than one electronic integrated circuit supported by the substrate 802.

In some embodiments, a photonic integrated circuit 806 may be supported by the substrate 802. The photonic integrated circuit 806 may be any type of photonic integrated circuit. For example, the photonic integrated circuit 806 may be an electro-optic modulator, a photodiode, a transmitter optical sub assembly and/or a receiver optical sub assembly.

When the light-transmitting medium is silicon, a suitable insulator includes, but is not limited to, silica and a suitable substrate includes a silicon substrate. A silicon-on-insulator wafer is a suitable platform for an optical device having a silicon light-transmitting medium positioned over a base having a silica insulator and a silicon substrate.

The device includes one or more waveguides that carry light signals to and/or from optical component. Examples of optical components that can be included on the device include, but are not limited to, one or more components selected from a group consisting of facets through which light signals can enter and/or exit a waveguide, entry/exit ports through which light signals can enter and/or exit a waveguide from above or below the device, multiplexers for combining multiple light signals onto a single waveguide, demultiplexers for separating multiple light signals such that different light signals are received on different waveguides, optical couplers, optical switches, lasers that act as a source of a light signal, amplifiers for amplifying the intensity of a light signal, attenuators for attenuating the intensity of a light signal, modulators for modulating a signal onto a light signal, modulators that convert a light signal to an electrical signal, and vias that provide an optical pathway for a light signal traveling through the device from the bottom side of the device to the top side of the device. Additionally, the device can optionally, include electrical components. For instance, the device can include electrical connections for applying a potential or current to a waveguide and/or for controlling other components on the optical device.

The optical interconnects may be configured to connect between chips or between different communication systems. For example, it might provide optical interconnecting for network interface controller (NIC) to switch, switch to switch, and/or chip to chip. Optical interconnects can be used in a variety of applications, such as switches, processing units (e.g., graphics processing units (GPUs), etc.). An optical interconnect can include an optical link (e.g., optical fiber) to transmit an optical signal. Optical interconnect bandwidth can be scaled by transmitting an optical signal including multiple wavelengths using the same optical link. In doing so, the transmitter is tuned to generate the optical signal including multiple carrier wavelengths. Moreover, each modulator of a modular array can be tuned to receive and modulate a respective carrier frequency. Ordering the multiple wavelengths can be important to ensure that the transmitter and receiver are properly communicating data contained within the optical signal.

In at least one example embodiment, the optical interconnect is part of a datacenter that corresponds to a collection of network devices, such as network switches (e.g., Ethernet switches, IP routers, multiservice platforms, various transmission network elements, legacy communication equipment, or in any other suitable communication system) connected with a collection of servers or compute nodes. A switch fabric serves to transfer the data between the switch ports. A switch fabric comprises one or more interconnect circuits, which may be arranged in various switch fabric architectures, e.g., m*m crossbar, Banyan, Benes, Omega, Clos, multi-plane, STS, TST, shared memory, buffered crossbar, any other suitable blocking or non-blocking architecture, or any applicable mixed architecture thereof. A switch fabric is realized in typical embodiments by hardware, which may comprise Field-Programmable Gate Arrays (FPGAs) and/or Application-Specific Integrated Circuits (ASICs), and in some implementations also bus interconnects. The datacenter may adhere to a networking topology (e.g., a hierarchal networking topology), such as a fat tree topology, a Slim Fly topology, a Dragonfly topology, and/or the like. The datacenter routes traffic amongst the network switches and servers therein, and at least one layer of the topology in the datacenter is coupled to the communication network to allow networking traffic to flow between the datacenter and the network device(s).

The optical interconnect may include a substrate and an electro-optical component (VCSEL, photodiode, etc.) supported by the substrate and configured to convert between electrical and optical signals. The optical interconnect may further include a transmission block defining a receiving surface configured to receive an optical fiber, and a waveguide configured to transmit optical signals between the electro-optical component and the receiving surface such that in an operational configuration in which the receiving surface receives an optical fiber, the electro-optical component and the optical fiber are in optical communication.

While the present disclosure illustrates and describes the optical interconnect without a housing or other protective casing, as would be understood by one of ordinary skill in the art in light of the present disclosure, some or all of the optical interconnect may be supported or enclosed by any housing used in communications systems to protect the components supported therein (e.g., as part of Quad Small Form-factor Pluggable (QSFP) connectors, Small Form Pluggable (SFP) connectors, or the like). Furthermore, the substrate hosting the electro-optical component may be substantially rectangular shape and/or may be dimensioned (e.g., sized and shaped) for use in any communication system regardless of geometric constraints (e.g., L-shaped, squared-shaped, etc.).

In various embodiments, an optical interconnect for receiving an optical fiber may be implemented in a flip-chip configuration. In certain embodiments, the optical interconnect is configured as a flip-chip component such that a longitudinal axis of the first adiabatic transition profile of the optical interconnect and a longitudinal axis of the second adiabatic transition profile of the optical interconnect may be collinear. Said differently, the orientation of the optical interconnect in such an embodiment does not require a mirror or other reflective surface to redirect optical signals between the electro-optical component and the receiving surface. As would be evident to one of ordinary skill in the art in light of the present disclosure, however, the optical interconnect in a flip-chip configuration may also include one or more mirrors (e.g., reflective surfaces) to accommodate optical fibers received at varying angles. In some optical interconnect embodiments, only mirrors may be operationally configured to redirect light given that at some bending radii, light may remain confined to the waveguide. Accordingly, embodiments of a field replaceable modular optical interconnect unit are described that are configured to be received by a main switch system box. The field replaceable modular optical interconnect unit comprises a housing comprising at least a front panel, a rear panel, and side panels extending between the front and rear panels, a printed circuit board assembly supported within the housing, an optical module supported on the printed circuit board assembly and configured to convert between optical signals and corresponding electrical signals for respectively transmitting or receiving optical signals through a fiber optic cable, a board-to-board connector disposed on the rear panel of the housing and configured to enable electrical signals to be transmitted between the printed circuit board assembly and a main switch system box, and an external connector disposed on the front panel of the housing and configured to engage an external optical fiber for transmitting optical signals between the optical module and an external component. The field replaceable modular optical interconnect unit may be configured to be electrically connected to the main switch system box via engagement of the board-to-board connector with a corresponding connector of the main switch system box when the housing is received by the main switch system box.

In some embodiments, the optical module may be a mid-board optical module (MBOM), and/or the field replaceable modular optical interconnect unit may comprise a plurality of external connectors. For example, the external connector may be a first external connector, and the field replaceable modular optical interconnect unit may further comprise a second external connector disposed on the front panel of the housing and configured to enable transmission of electrical signals between the printed circuit board assembly and an external component connected thereto.

An optical interconnect typically comprises a driver circuit which drives an electro-optical element such as a light emitter (typically with a binary signal), a waveguide (typically an optical fiber), and a receiver. In such a setup the light emitter typically consumes a significant part of the power requirement of the optical interconnect. An optical interconnect is typically composed by a transceiver module in each end adapted to transmit optical information along one or two optical fibers. The transmitter of each transceiver typically comprises a driver circuit coupled to a light source and a receiver circuit coupled to a photo detector. Typically optical fibers are used as transmission medium in which case the light source and photo detector will be coupled to fibers. A driver circuit (often located on a driver chip) is a circuit tailored to generate a waveform appropriate to drive a light emitting device in response to an input signal which is typically a binary data stream. The combination of a driver circuit and a light source is referred to as a transmitter. A receiver circuit (often located on a receiver chip) is a circuit tailored to receive the output from the light detector and generate a corresponding binary data stream. The combination of a receiver circuit and a photodetector is referred to as a receiver. Often the receivers and transmitters provide multiple channels, i.e., the ability to transmit or receive via multiple light sources or photodetectors. Sometimes driver and receiver circuits are combined on the same chip which is then referred to as a transceiver chip. Besides driver, receiver and/or transceiver chips, optical modules may comprise further chips and electronics such as e.g., a microcontroller. Typically, the binary signal used in such optical links is an amplitude modulated NRZ signal but other signal types are in principle possible.

In a typical optical interconnect Vertical Cavity Surface Emitting Laser (VCSEL) diodes are utilized as light emitters to transmit binary data over optical fibers. However, the light source may in principle be any suitable light source and the transmitted waveform may be any suitable waveform for transmitting information. Most light emitters have a threshold current above which they substantially begin to emit light. Increasing the current driven through the emitter from zero to above said threshold may be time consuming, and therefore a bias current is typically driven through the light source. Often the bias current is set just below, at the threshold or above the threshold, but it may also be set to be well above threshold. This bias current is often programmable so that the same circuit design may be utilized to drive different light emitters and/or be used for different applications. Additional time varying current which modulates the emission from the light emitter is referred to as the modulation current.

In some embodiments, the disclosed technique provides an EO interconnect assembly comprising a pair of pluggable EO transceivers connected at respective ends of an optical fiber. The EO transceivers are typically used to connect network-connected devices (e.g., remote client switches, network adapters such as Network Interface controllers (NICs) and Host Channel Adapters (HCAs), Smart-NICs (NICs having embedded CPUs), network-enabled Graphics Processing Units (GPUs), and the like). The terms "network-connected device" and "network device" are used interchangeably herein. In certain embodiments, an optical interconnect includes a substrate, one or more optical waveguides, one or more first micro-lenses, one or more second micro-lenses, and first and second mechanical fixtures. Moreover, when designing an optical interconnect module, it is highly desirable to place the EO component driving circuitry in close proximity to the EO transducers, in order to maintain high signal integrity. As a result, however, heat generated in the driving circuitry may increase the junction temperatures of the transducers and thus degrade their performance.

In order to resolve the above-described heat removal issues, the disclosed optical interconnect modules comprise cooling elements that are highly-integrated with the other elements of the optical interconnect module. In particular, the optical interconnect module typically comprises a light coupling module for coupling the optical signals between the optical fibers and the optoelectronic transducers. The light coupling module comprises light coupling elements such as micro-lenses or prisms. In the disclosed embodiments, this light coupling module additionally serves as a baseplate for the cooling elements. The resulting mechanical design is extremely compact and yet efficient in removing heat. The light coupling module is also referred to herein as an integrated optical cooling core.

An optical or electrical interposer is an interconnect substrate designed to facilitate high-density signal routing between multiple integrated circuit (IC) dies, or between IC dies and a system-level substrate such as a printed circuit board (PCB). The interposer serves as an intermediate platform that enables either electrical or optical communication-or a combination of both-depending on the application and design requirements.

In an electrical interposer, signal transmission is achieved through embedded metal traces, redistribution layers (RDLs), and vertical interconnects such as through-silicon vias (TSVs), through-glass vias (TGVs), or microvias. Electrical interposers support fine-pitch interconnects, low parasitic loss, and are well-suited for high-speed chip-to-chip communication, power delivery, and ground distribution.

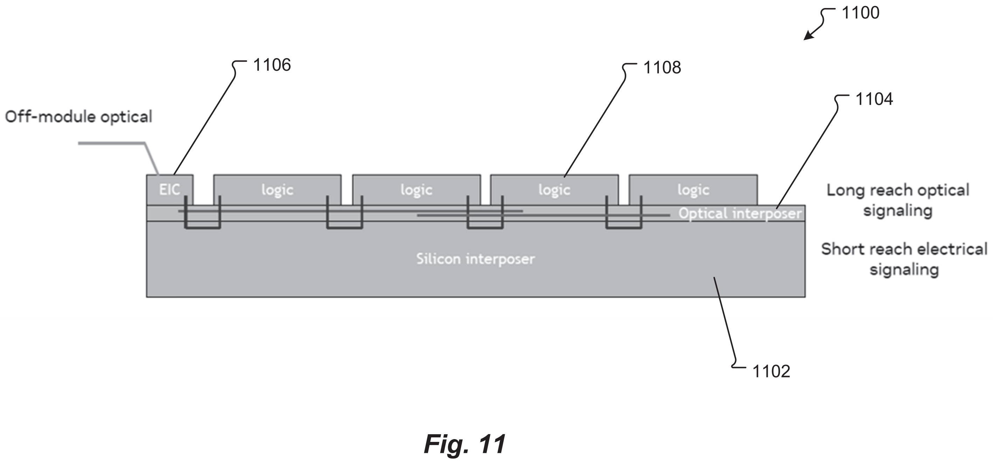

Fig. 11 illustrates an example of an optical interposer, where the substrate 1102 incorporates optical waveguides 1104 and associated photonic components such as grating couplers, lenses, or mirrors to guide light between components such as EIC 1106 and logic dies 1108 and/or to external fiber interfaces. Optical interposers enable low-latency, high-bandwidth data transmission with reduced electromagnetic interference (EMI) and lower power consumption compared to purely electrical solutions. The optical interconnect layer may be fabricated using materials such as silicon, silicon nitride, or polymer waveguides, and may be co-integrated with electrical layers in a multilayer interposer stack. The interposer may also support heterogeneous integration, allowing dies fabricated using different process technologies (e.g., CMOS logic, memory, RF, or photonics) to be interconnected within a single package. This enables system scalability, performance optimization, and functional diversification within compact form factors.

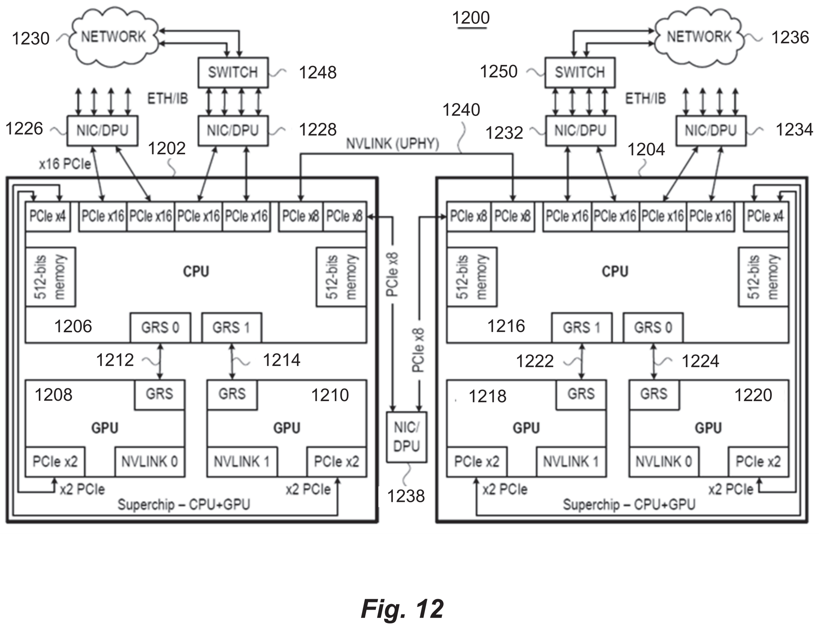

As may be appreciated, various embodiments described herein may be implemented within or in conjunction with a computing system such as the computing system 1200 shown in Fig. 12.

Fig. 12 is a block diagram that schematically illustrates an example computing system or environment 1200, e.g., a data center or a High-Performance Computing (HPC) cluster, in accordance with an embodiment that is described herein. System 1200 comprises a plurality of subsystems, e.g. multiple processing devices coupled to each other, multiple network devices, and multiple networks, according to at least one embodiment. Computing system 1200 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 1200 and to one or more external networks 1230, 1236. In the present example, system 1200 comprises a packet switch 1248 that connects NIC/DPU 1228 to network 1230, and a packet switch 1250 that connects NIC/DPU 1232 to network 1236.

The coupling of processing devices through NVLink allows for seamless data exchange and parallel processing, enhancing overall computational performance. The processing devices are connected to multiple networks through one or more network interface controllers (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 1200 can include one or more CPUs and one or more GPUs.

Fig. 12 also demonstrates an example architecture of a multi-GPU architecture. As illustrated in the figure, computing system 1200 includes a processing device 1202 with a multi-GPU architecture. In particular, processing device 1202 may be a system-on-chip and includes multiple subsystems such as a CPU 1206, a GPU 1208, and a GPU 1210. CPU 1206 can be coupled to GPU 1208 via a die-to-die (D2D) or chip-to-chip (C2C) interconnect 1212, such as a Ground-Referenced Signaling interconnect (GRS interconnect). CPU 1206 can be coupled to GPU 1210 via a D2D or C2C interconnect 1214. CPU 1206 can also couple to GPU 1208 and GPU 1210 via PCIe interconnects.

CPU 1206 can be coupled to one or more NICs or DPUs, which are coupled to one or more networks. For example, as illustrated in Fig. 12, CPU 1206 is coupled to a first NIC/DPU 1226, which is coupled to a network 1230. CPU 1206 is also coupled to a second NIC/DPU 1228, which is coupled to network 1230 via switch 1248. NIC/DPU 1226 and NIC/DPU 1228 can be coupled to network 1230 over Ethernet (ETH), NVLINK or InfiniBand (IB) connections, for example.

Computing system 1200 also includes a processing device 1204 with a multi-GPU architecture. In particular, processing device 1204 includes multiple subsystems including a CPU 1216, a GPU 1218, and a GPU 1220. CPU 1216 can be coupled to GPU 1218 via an D2D or C2C interconnect 1222. CPU 1216 can be coupled to GPU 1220 via a D2D or C2C interconnect 1224. CPU 1216 can also couple to GPU 1218 and GPU 1220 via PCIe interconnects. CPU 1216 can be coupled to one or more NICs or DPUs, which are coupled to one or more networks. For example, as illustrated in Fig. 12, CPU 1216 is coupled to a first NIC/DPU 1232, which is coupled to a network 1236. CPU 1216 is also coupled to a second NIC/DPU 1034, which is coupled to network 1236 via switch 1250. NIC/DPU 1232 and NIC/DPU 1034 can be coupled to network 1236 over Ethernet (ETH), NVLINK or InfiniBand (IB) connections.

In at least one embodiment, processing device 1202 and processing device 1204 can communication with each other via a NIC/DPU 1238, such as over PCIe interconnects. Processing device 1202 and processing device 1204 can also communicate with each other over a high-bandwidth communication interconnects 1240, such as an NVLink interconnect or other high-speed interconnects. The packet switches in Fig. 12 may comprise, for example, Nvidia Quantum-2 switches. The NICs/DPUs in the figure may comprise, for example, Nvidia Bluefield DPUs.

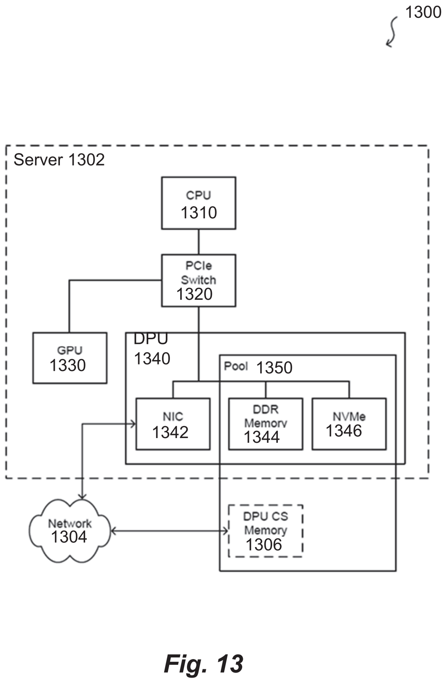

Fig. 13 illustrates another example computing system or environment 1300, in accordance with at least one embodiment.

Fig. 13 illustrates an example computing environment 1300 in which forward pass offloading to available memory can be performed, in accordance with at least one embodiment. It should be appreciated that embodiments of the present disclosure may also be used with reference to alternative environments and that specific discussion of components may be provided by way of non-limiting example and may include equivalents. Moreover, various features have been removed for clarity and conciseness. Additionally, systems and methods may be used with a variety of different architectures. The example computing environment 1300 may include a server 1302 which may be used to perform HPC workloads, such as AI training or machine learning model training. In an embodiment, the server 1302 may be an application instance or a compute node. The server 1302 may include a CPU 1310 associated with a switch 1320, such as a peripheral component interconnect express (PCIe) switch, which may control at least some data transmission over communication paths interconnecting various components. In an embodiment, the CPU 1310 may include a root complex processor.

The PCIe switch 1320 may also be associated with a GPU 1330 and a DPU 1340, and may transmit data between at least some of the CPU 1310, the GPU 1330, the DPU 1340, and other components. In an embodiment, the PCIe switch 1320 may be associated with more than one GPU or more than one DPU. In another embodiment, the PCIe switch 1320 may be located within the DPU 1340. The PCIe switch 1320 may manage the transfer of at least some data between the CPU 1310, the GPU 1330, and the DPU 1340. In another embodiment, the number of GPUs associated with the PCIe switch 1320 may be equal to the number of DPUs associated with the PCIe switch 1320. In at least one embodiment, the server 1302 may include, without limitation, any number of the CPUs 1310, the PCIe switches 1320, the GPUs 1330, and/or the DPUs 1340, in any combination. For example, in at least one embodiment, server 1302 could include eight, sixteen, thirty-two, and/or more GPUs 1330. In at least one embodiment, communication paths interconnecting various components, including but not limited to the CPU 1310, the PCIe switch 1320, the GPU 1330, and the DPU 1340, in Fig. 13 may be implemented using any suitable protocols, such as peripheral component interconnect (PCI) based protocols (e.g., PCIe), or other bus or point-to-point communication interfaces and/or protocol(s), such as NV-Link high-speed interconnect, or interconnect protocols.

The DPU 1340 may include a network interface controller (NIC) 1342, a DDR memory 1344, and a non-volatile memory express (NVMe) device 1346. The NIC 1342 may be able to interface with a network 1304, which may also interface with additional NVMe devices available to the DPU 1340, such as over fabric. In an embodiment, the DPU 1340 may not include the NVMe device 1346. In another embodiment, the NVMe device 1346 may be located on the server 1302 and not on the DPU 1340. In yet another embodiment, the computing environment 1300 may include more than one of the NVMe device 1346, such as a first NVMe device in the DPU 1340 and a second first NVMe device on the server 1302 an associated directly with the PCIe switch 1320. In an embodiment, the DPU 1340 may not include the DDR memory 1344 and may include a computational storage services (CSS) in place of, or in addition to, the DDR memory 1344. For example, computing environment 1300 may include DPU computational storage (CS) memory 1306 available to the DPU 1340 as part of the CSS. The network 1304 may be able to interface with the DPU CS memory 1306 through the NIC 1342, according to any suitable interface protocol, such as remote direct memory access (RDMA) over Ethernet, InfiniBand, Fiber Channel, etc.

The total memory of the computing environment 1300 available for data storage may be expanded through the use of the DPU 1340 on nodes of the system. The DPU 1340 may have access to a pool 1350 of memory already available to the server 1302, such as double data rate (DDR) memory, on-board NVMe devices, NVMe devices over fabric, and CS. The pool 1350 of memory may include at least one of the DDR memory 1344, NVMe 1346, and the DPU CS memory 1306. The DPU 1340 may also be able to access the available memory of other DPUs as part of the pool 1350, and other DPUs may be able to access the available memory of DPU 1340, such as the pool 1350. This available memory can be accessed and utilized for data storage, without the addition of compute resources, such as compute nodes, which would be required using other solutions. The available pool 1350 accessible to the DPU 1340 may be provisioned for the server 1302 to expand the total memory available for data storage, such as to reduce the data storage load on the CPU 1310 or the GPU 1330, which can instead increase the utilization of their memory for processing. For example, during training of an AI, the model states, residual states, activation functions, and checkpoints can be stored, or offloaded, on the pool 1350 accessible to the DPU 1340.

In some examples, the systems 1200 and/or 1300 may alternatively or additionally include quantum processing units (QPUs) configured to perform one or more operations associated with a quantum algorithm. In some embodiments, each of the one or more QPUs may include a plurality of qubits and the one or more QPUs may be in communication with each other via a quantum channel. In some embodiments, each of the plurality of qubits may include local qubits, global qubits, and/or synchronization qubits. In some embodiments, the local qubits of each QPU may be configured to perform the one or more operations associated with the quantum algorithm on the QPU that the local qubits are associated with.

In the description, terms "coupled" and "connected," along with their derivatives, may be used. It should be understood that these terms may not be intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, the terms "processor" and "processing circuitry" may refer to any device or portion of a device that processes electronic data from registers and/or memory and transform that electronic data into other electronic data that may be stored in registers and/or memory. As non-limiting examples, "processor" may be a CPU or a GPU. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

As used herein, "operatively coupled" may mean that the components are electronically or optically coupled and/or are in electrical or optical communication with one another. Furthermore, "operatively coupled" may mean that the components may be formed integrally with each other or may be formed separately and coupled together. Furthermore, "operatively coupled" may mean that the components may be directly connected to each other or may be connected to each other with one or more components (e.g., connectors) located between the components that are operatively coupled together. Furthermore, "operatively coupled" may mean that the components are detachable from each other or that they are permanently coupled together.

Furthermore, it should be appreciated that the various links connecting the elements can be wired, traces, or wireless links, or any appropriate combination thereof, or any other appropriate known or later developed element(s) that is capable of supplying and/or communicating data to and from the connected elements. Transmission media used as links, for example, can be any appropriate carrier for electrical signals, including coaxial cables, copper wire and fiber optics, electrical traces on a PCB, or the like.

Like numbers refer to like elements throughout. As used herein, terms such as "front," "rear," "top," etc. are used in the examples provided below to describe the position of certain components or portions of components in an installed and operational configuration. As used herein, the term "module" encompasses hardware, software and/or firmware configured to perform one or more particular functions, including but not limited to conversion between electrical and optical signals and transmission of the same. As would be evident to one of ordinary skill in the art in light of the present disclosure, the term "substantially" indicates that the referenced element or associated description is accurate to within applicable engineering tolerances.

Many modifications and other embodiments of the disclosures set forth herein will come to mind to one skilled in the art to which these disclosures pertain having the benefit of teachings presented in the foregoing descriptions and the associated drawings. Although the figures only show certain components of the apparatus and systems described herein, it is understood that various other components (e.g., components of printed circuit boards, transceivers, cables, etc.) may be used in conjunction with the cage receptacle assembly. Therefore, it is to be understood that the disclosures are not to be limited to the specific embodiments disclosed and that modifications and other embodiments are intended to be included within the scope of the appended claims.

It is to be appreciated that any feature described herein can be claimed in combination with any other feature(s) as described herein, regardless of whether the features come from the same described embodiment.

Specific details were given in the description to provide a thorough understanding of the embodiments. However, it will be understood by one of ordinary skill in the art that the embodiments may be practiced without these specific details. In other instances, well-known circuits, processes, algorithms, structures, and techniques may be shown without unnecessary detail in order to avoid obscuring the embodiments.

While illustrative embodiments of the disclosure have been described in detail herein, it is to be understood that the inventive concepts may be otherwise variously embodied and employed, and that the appended claims are intended to be construed to include such variations, except as limited by the prior art.

It will be understood that aspects and embodiments are described herein purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A waveguide, comprising:
   an inner rib comprising a core of the waveguide; and
   first and second outer ribs having at least one structural feature different from the inner rib.
Clause 2. The waveguide of clause 1, wherein the at least one structural feature corresponds to the first and second outer ribs having cross-sectional areas different from a cross-sectional area of the inner rib.
Clause 3. The waveguide of clause 2, wherein the cross-sectional areas of the first and second outer ribs are each greater than the cross-sectional area of the inner rib.
Clause 4. The waveguide of clause 3, wherein the first and second outer ribs are each wider than the inner rib.
Clause 5. The waveguide of clause 3, wherein the first and second outer ribs comprise a plurality of recesses or protrusions.
Clause 6. The waveguide of clause 1, wherein the at least one structural feature corresponds to an additional layer on the first and second outer ribs.
Clause 7. The waveguide of clause 6, wherein the additional layer comprises a compound semiconductor layer.
Clause 8. The waveguide of clause 7, wherein the compound semiconductor layer comprises silicide.
Clause 9. The waveguide of clause 8, wherein the silicide comprises silicon and an electropositive element including cobalt, copper, nickel, or tungsten.
Clause 10. The waveguide of clause 1, wherein the inner rib and the first and second outer ribs comprise silicon.
Clause 11. The waveguide of clause 10, wherein the inner rib and the first and second outer ribs are a one piece structure.
Clause 12. The waveguide of clause 11, wherein widths of the first and second outer ribs are greater than a width of the inner rib.
Clause 13. The waveguide of clause 1, wherein widths of the first and second outer ribs are greater than or equal to a width of a space between the inner rib and at least one of the first and second outer ribs.
Clause 14. The waveguide of clause 1, wherein widths of the first and second outer ribs are at least seven times greater than a largest thickness of the waveguide.
Clause 15. An optical device, comprising:
   a silicon waveguide comprising:
      an inner section comprising a core of the silicon waveguide; and
      an outer section spaced apart from the inner section; and
   a silicide layer on the outer section.
Clause 16. The optical device of clause 15, wherein the inner section comprises a first rib that forms at least part of the core.
Clause 17. The optical device of clause 16, wherein the outer section comprises:
   a second rib spaced apart from a first side of the first rib; and
   a third rib spaced apart from a second side of the first rib opposite the first side.
Clause 18. The optical device of clause 15, further comprising:
   a base comprising cladding material, wherein the silicon waveguide is on the base.
Clause 19. The optical device of clause 15, wherein a thickness of the silicide layer is between 30nm and 70nm.
Clause 20. An optical system, comprising:
   one or more circuits to generate optical signals;
   a waveguide to carry the optical signals and comprising:
      an inner section comprising a core of the waveguide; and
      an outer section spaced apart from the inner section; and
   a silicide layer on the outer section.

## Claims

1. A waveguide, comprising:
an inner rib comprising a core of the waveguide; and
first and second outer ribs having at least one structural feature different from the inner rib.

2. The waveguide of claim 1, wherein the at least one structural feature corresponds to the first and second outer ribs having cross-sectional areas different from a cross-sectional area of the inner rib.

3. The waveguide of claim 2, wherein the cross-sectional areas of the first and second outer ribs are each greater than the cross-sectional area of the inner rib.

4. The waveguide of claim 3, wherein the first and second outer ribs are each wider than the inner rib.

5. The waveguide of claim 3 or 4, wherein the first and second outer ribs comprise a plurality of recesses or protrusions.

6. The waveguide of any of claims 1-5, wherein the at least one structural feature corresponds to an additional layer on the first and second outer ribs.

7. The waveguide of claim 6, wherein the additional layer comprises a compound semiconductor layer, wherein the compound semiconductor layer comprises silicide, wherein the silicide comprises silicon and an electropositive element including cobalt, copper, nickel, or tungsten.

8. The waveguide of any of claims 1-7, wherein the inner rib and the first and second outer ribs comprise silicon, wherein the inner rib and the first and second outer ribs are a one piece structure, wherein widths of the first and second outer ribs are greater than a width of the inner rib.

9. The waveguide of any of claims 1-8, wherein widths of the first and second outer ribs are greater than or equal to a width of a space between the inner rib and at least one of the first and second outer ribs.

10. The waveguide of any of claims 1-9, wherein widths of the first and second outer ribs are at least seven times greater than a largest thickness of the waveguide.

11. An optical device, comprising:
a silicon waveguide comprising:
an inner section comprising a core of the silicon waveguide; and
an outer section spaced apart from the inner section; and
a silicide layer on the outer section.

12. The optical device of claim 11, wherein the inner section comprises a first rib that forms at least part of the core, wherein the outer section comprises:
a second rib spaced apart from a first side of the first rib; and
a third rib spaced apart from a second side of the first rib opposite the first side.

13. The optical device of claim 11 or 12, further comprising:
a base comprising cladding material, wherein the silicon waveguide is on the base.

14. The optical device of claim 11, 12, or 13, wherein a thickness of the silicide layer is between 30nm and 70nm.

15. An optical system, comprising:
one or more circuits to generate optical signals;
a waveguide to carry the optical signals and comprising:
an inner section comprising a core of the waveguide; and
an outer section spaced apart from the inner section; and
a silicide layer on the outer section.
